# EUROPÄISCHE PATENTANMELDUNG

(11) **EP 4 063 532 A1**
(43) Veröffentlichungstag der Anmeldung: **28.09.2022**
(21) Anmeldenummer: 22020179.2
(22) Anmeldetag: 29.03.2008
(51) Int. Cl.: C23C 4/06, C23C 4/12, C23C 24/08, C23C 24/10, C23C 28/02, C23C 30/00, C22C 9/02, C22C 29/08

(54) **GROSSMOTOR MIT EINEM ZU EINER GLEITPAARUNG GEHÖRENDES MASCHINENTEIL SOWIE DERARTIGES MASCHINENTEIL UND VERFAHREN ZU DESSEN HERSTELLUNG**

(30) Priorität: 25.04.2007 DE 102007019510
(62) Teilanmeldung aus: 08734884.3
(71) Anmelder: MAN Energy Solutions, filial af MAN Energy Solutions SE, Tyskland, 2450 Copenhagen SV (DK)
(72) Erfinder: BENZON, Michale Eis, 3480 FREDENSBORG (DK)
(74) Vertreter: Patentanwälte Munk

(57) **Zusammenfassung**

Bei einem zu einer Gleitpaarung gehörenden Maschinenteil (4), das zumindest im Bereich der dem hiermit zusammenwirkenden Maschinenteil zugewandten Seite eine verschleißfeste Struktur (6) mit in einer metallischen Matrix aufgenommenen, vergleichsweise harten Partikeln und mit rauer und unebener Oberfläche aufweist, lassen sich dadurch der Herstellungsaufwand senken und ein gutes Einlaufverhalten erreichen, dass auf die verschleißfeste Struktur (6) eine deren obere Unebenheit und Rauheit ausgleichende Einlaufauflage (7) aufgebracht wird, die aus einem für Verschleiß während eines Einlaufvorgangs geeigneten Einlaufmaterial besteht, das vom Material der darunter sich befindenden, verschleißfesten Struktur (6) verschieden und metallurgisch hiermit verbunden ist und das weicher als die verschleißfeste Struktur (6) und höchstens gleich verschleißfest wie die Gleitfläche des jeweils gegenüberliegenden Maschinenteils ist.

## Beschreibung

Die Erfindung betrifft einen Großmotor, insbesondere Zweitakt-Großdieselmotor, mit einem Maschinenteil, das zu einer Gleitpaarung mit zwei gegeneinander bewegbaren Maschinenteilen gehört, und zumindest im Bereich der dem jeweils anderen Maschinenteil zugewandten Seite eine verschleißfeste Struktur mit in einer metallischen Matrix aufgenommenen Partikeln aus vergleichsweise hartem Material und mit rauer und unebener Oberfläche aufweist und das als Kolbenring oder Zylinderbüchse oder Kolben mit wenigstens einer Kolbenringnut oder anderes Gleitelement eines Großmotors ausgebildet ist.

Aus der DE 10 2006 023 396 ergibt sich ein eine verschleißfeste Struktur in Form einer Verschleißschutzbeschichtung aufweisendes Maschinenteil eines Großmotors. Die Verschleißschutzbeschichtung besteht dabei aus in eine durch ein Ni-Legierung gebildete Matrix eingelagerten Keramikpartikeln. Dabei ist an der Oberseite der Beschichtung eine dünne, nur aus dem Matrixmaterial bestehende Deckschicht vorgesehen. Die Oberfläche dieser Deckschicht erweist sich jedoch, wie die Praxis gezeigt hat, als sehr rau und uneben, was für einen Einlaufvorgang ungünstig ist. Es ist daher eine Bearbeitung in Form eines Schleifvorgangs erforderlich. Die Erfahrung hat gezeigt, dass dieser sehr zeitaufwendig und kostspielig ist. Hierzu kommt, dass die Ni-Legierung in Folge ihrer Härte für Einlaufzwecke ohnehin ungünstig ist.

Aus der WO 00/42238 A ergibt sich ein Gleitelement eines Großmotors, das im Bereich der dem jeweils gegenüberliegenden Maschinenteil zugewandten Seite mit einem Schutzbelag versehen ist. Dieser wird dadurch gebildet, dass auf das Grundmaterial eine Lage einer Aluminiumbronze aufgeschmolzen wird. Bei diesem Aufschmelzvorgang bilden sich innerhalb der einen Lage zwei Zonen unterschiedlicher Festigkeit, nämlich eine innere, dem Grundmaterial benachbarte, verschleißfeste Zone und eine äußere, eine vergleichsweise weiche Deckschicht bildende Zone.

Die US 2004/0265618 A1 beschreibt eine Lagerschale, wobei auf ein aus Stahl bestehendes Basisteil eine aus einer Kupferlegierung bestehende Basisschicht auf diese eine aus einer Nickellegierung bestehende Zwischenschicht und auf diese eine weitere, aus einer Zinnlegierung bestehende Deckschicht aufgebracht werden. Nach dem Beschichtungsvorgang erfolgt eine mehrstündige Wärmebehandlung, durch die eine aus SnCu bestehende Zone mit in die Deckschicht vorstehenden nadelartigen Vorsprüngen gebildet wird.

Die US 2006/0120 645 A1 beschreibt eine Lagerschale, wobei auf ein Grundmetall eine Beschichtung aufgebracht wird, die eine innere Schicht aus Cu-Pb oder Cu-Al enthält. In der äußeren Zone dieser Schicht sind in das hier als Matrix fungierende Schichtmetall eingebettete, harte Partikel vorgesehen. Darüber befindet sich eine Sperrschicht und darüber wiederum eine Außenschicht.

Die WO 02/24970 A beschreibt eine verschleißfeste Struktur mit einer Matrix und mit in diese eingebetteten, harten Partikeln, wobei die Menge der Matrix 5 bis 70 Vol% und die Menge der harten Teilchen 30 bis 95 Vol% betragen soll.

Die WO 2005/033 353 A beschreibt einen Gleitbelag, der auf der Verwendung von Kupfer und Zinn beruht, wobei ein Gefüge angestrebt wird, bei dem eine Kupfermatrix und in dieser verteilte Zinn-Weichphasen enthalten sind, die dadurch gebildet werden, dass das Zinn sich in der a-Kupfer-Phase löst.

Die GB 2 359 822 A beschreibt einen Gleitbelag mit einer durch eine Cu-Legierung gebildeten Matrix, in die aus einem harten Material bestehende Partikel eingelagert sind und die von einer aus Softmetall oder Harz bestehenden äußeren Schutzschicht überdeckt ist. Der Volumenanteil der harten Partikel soll lediglich 0,1 bis 10 Vol% betragen.

Hiervon ausgehend ist es daher die Aufgabe der vorliegenden Erfindung, eine Anordnung eingangs erwähnter Art so zu verbessern, dass der Herstellungsaufwand gesenkt und ein gutes Einlaufverhalten erreicht werden. Eine weitere Aufgabe geht auf ein einfaches und kostengünstiges Verfahren zur Herstellung des erfindungsgemäßen Maschinenteils.

Der erste Teil der Aufgabe wird durch die Merkmale des Anspruchs 1 gelöst.

Hiermit werden die oben geschilderten Nachteile der bekannten Anordnung vollständig beseitigt. Da die Einlaufauflage aus Einlaufmaterial besteht, sind gute Einlaufeigenschaften zu erwarten. Da die Einlaufauflage die Rauheit und Unebenheit der darunter sich befindenden, verschleißfesten Struktur ausgleicht, ist in vorteilhafter Weise eine Schleifbearbeitung entbehrlich. Außerdem wird hierdurch sicher gestellt, dass auch die in den oberen Zonen sich befindenden, harten Teilchen der verschleißfesten Struktur auch dann noch einen zuverlässigen Halt finden, wenn ihre Oberfläche gegen Ende des Einlaufvorgangs freigelegt wird, so dass ein Ausbrechen dieser Teilchen nicht zu befürchten ist. Die ungeschliffene Oberfläche ergibt in vorteilhafter Weise auch von Anfang an eine gasdichte Anlage, was insbesondere bei Gleitpaarungen zwischen Kolbenring und Zylinderbüchse sehr erwünscht ist. Ein weiterer Vorteil der erfindungsgemäßen Maßnahmen ist darin zu sehen, dass in Folge der metallurgischen Anbindung der Einlaufauflage ein zuverlässiger Halt der Einlaufauflage auf der darunter sich befindenden, verschleißfesten Struktur gewährleistet ist, womit ein Abschälen sicher vermieden wird.

Vorteilhafte Ausgestaltungen und zweckmäßige Fortbildungen der übergeordneten Maßnahmen sind in den Unteransprüchen angegeben.

So kann die Einlaufauflage zweckmäßig eine Härte von 100 bis 200 HV aufweisen. Hierbei ist ein besonders gutes Einlaufverhalten zu erwarten. Dennoch ist eine ausreichende Beständigkeit gewährleistet, um eine ausreichend lange Einlaufzeit sicher zu stellen.

Eine weitere Fortbildung der übergeordneten Maßnahmen kann darin bestehen, dass das die Einlaufauflage bildende Material eine Schmelztemperatur von unter 1050° C, vorzugsweise von 600° C bis 800° C aufweist. Diese Maßnahme ermöglicht in vorteilhafter Weise eine einfache Herstellung der Einlaufauflage, bei der nur das Material der Einlaufauflage geschmolzen wird und das Material der darunter sich befindenden, verschleißfesten Struktur im erstarrten Zustand bleibt. Hierdurch wird sicher gestellt, dass sehr dünne, die metallurgische Anbindung der Einlaufauflage an die darunter sich befindende, verschleißfeste Struktur bewirkende Grenzschichten erreicht werden können. Die in diesen Grenzschichten vielfach zu erwartende Sprödheit wirkt sich daher in vorteilhafter Weise nur geringfügig auf das Gesamtergebnis aus.

Vorteilhaft kann die Einlaufauflage im Neuzustand eine durchschnittliche Dicke von 50 bis 300 Mikrometer (µm) aufweisen. Eine derartige Dicke reicht erfahrungsgemäß für eine Einlaufzeit von 1000 bis 2000 Stunden aus, wobei der Abrasivität der gegen überliegenden Gleitfläche durch Anpassung der Dicke Rechnung getragen werden kann. Je abrasiver die gegenüberliegende Gleitfläche ist, desto dicker kann die Einlaufauflage sein.

Eine weitere Fortbildung der übergeordneten Maßnahmen kann darin bestehen, dass die Einlaufauflage im Neuzustand eine Oberflächenrauheit von 1 bis 20 Ra aufweist. Dies macht eine Nachbearbeitung völlig entbehrlich und gewährleistet dennoch von Anfang an eine besonders gute Abdichtung.

Eine besonders zweckmäßige Fortbildung der übergeordneten Maßnahmen kann darin bestehen, dass in das der Einlaufauflage zugrunde liegende Einlaufmaterial demgegenüber härtere Teilchen, vorzugsweise aus keramischem Material, wie Al₂O3 und/oder CrO und/oder Cr₃C₂, eingelagert sind. Hierdurch kann die Standzeit der Einlaufauflage und damit die Einlaufzeit verlängert werden. Zweckmäßig kann der Anteil der eingelagerten Teilchen am Gesamtvolumen der Einlaufauflage im Bereich zwischen 5 bis 30 Vol% betragen. Hierdurch wird sichergestellt, dass die eingelagerten Teilchen das Einlaufverhalten nicht unzulässig stark beeinträchtigen können.

Vorteilhaft kann das der Einlaufauflage zugrunde liegende Einlaufmaterial zumindest Kupfer (Cu) und/oder Zinn (Sn) enthalten. Dies gestattet eine Optimierung der gewünschten Einlaufeigenschaften je nach Einzelfall.

Eine besonders vorteilhafte Ausgestaltung kann dabei darin bestehen, dass die Einlaufauflage ca. 70 % Kupfer (Cu) und ca. 30 % Zinn (Sn) enthält. Ein derartiges Material ist in vorteilhafter Weise für viele Fälle verwendbar. Es ist auch denkbar, zusätzlich noch einen Bestandteil an Antimon (Sb) hinzuzufügen. Dabei entsteht ein sog. Weißmetall, das in der Praxis als Lagermetall Verwendung findet und daher günstig erhältlich ist.

Die die Einlaufauflage aufnehmende, verschleißfeste Struktur kann zweckmäßig eine durch eine Ni-Legierung gebildete Matrix enthalten, in die aus keramischem Material bestehende Partikel eingelagert sind, wobei der Volumenanteil des keramischen Materials am Gesamtvolumen der verschleißfesten Struktur mehr als 60 %, vorzugsweise 85 % betragen kann. Diese Maßnahmen ergeben eine besonders hohe Tragfestigkeit und Verschleißfestigkeit. Durch kleinere Zusätze von Phosphor (P) und/oder Silizium (Si) lässt sich die Schmelztemperatur der Matrix unter die Schmelztemperatur von Gusseisen etc. absenken, was die Aufbringung der Einlaufauflage auf die verschleißfeste Struktur und/oder dieser auf einen Basiskörper erleichtern kann.

Die auf das Verfahren sich beziehende Aufgabe wird erfindungsgemäß durch die Merkmale des Anspruchs 10 gelöst.

Sofern eine dicke Grenzschicht zwischen verschleißfester Struktur und Einlaufauflage erwünscht ist, wird so viel Energie zugeführt, dass die Einlaufauflage anlegiert wird. Wo dies nicht erwünscht ist, wird die Energiezufuhr demgegenüber so weit reduziert, dass die Einlaufauflage andiffundiert wird. Dabei wird nur so viel Energie benötigt, dass lediglich das die Einlaufauflage bildende Material schmilzt und die darunter sich befindende verschleißfeste Struktur im erstarrten Zustand bleibt. Infolgedessen werden hierbei vergleichsweise dünne Grenzschichten erreicht. Zudem ist eine Schädigung der tragenden Struktur ausgeschlossen.

Vorteilhaft kann zur Beschichtung der verschleißfesten Struktur eine gegenüber dieser relativ bewegbare, auf dieser einen Heizfleck erzeugende Heizeinrichtung Verwendung finden, wobei das die Einlaufauflage bildende Material in den Heizfleck oder einen diesem direkt benachbarten Bereich zugeführt wird. Dies ermöglicht einen einfachen Aufbau der Beschichtungsvorrichtung, sowie eine kontrollierte Energiezufuhr in engen Grenzen. Das dem Heizfleck oder einem diesem direkt benachbarten Bereich zugeführte Material kann dabei in Pulverform und/oder in Form eines Drahts oder Bands zugeführt werden.

Besonders vorteilhaft ist es, wenn bei als Beschichtung eines Basismaterials ausgebildeter verschleißfester Struktur diese und die Einlaufauflage in gleicher Weise auf die jeweils zugeordnete Unterlage aufgebracht werden. Dies ist gleichzeitig oder mit zeitlichem Abstand möglich. In jedem Fall wird der gerätetechnische Aufwand gering gehalten.

Weitere vorteilhafte Ausgestaltungen und zweckmäßige Fortbildungen der übergeordneten Maßnahmen sind in den restlichen Unteransprüchen sowie dem weiterem Nebenanspruch 15 angegeben und aus der nachstehenden Beispielsbeschreibung anhand der Zeichnung näher entnehmbar.

In der nachstehend beschriebenen Zeichnung zeigen:
- Figur 1: ein Anwendungsbeispiel in Form eines mit einer Zylinderbüchse zusammenwirkenden, mit einer tragenden Struktur und hierauf angeordneter Einlaufauflage versehenen Kolbenrings im Schnitt;
- Figur 2: einen Ausschnitt aus der Einlaufauflage mit angrenzendem Bereich der verschleißfesten Struktur;
- Figur 3: einen Ausschnitt aus einer mit eingelagerten Keramikteilchen versehenen Einlaufauflage;
- Figur 4: eine Beschichtungsvorrichtung mit zwei Laserkanonen mit jeweils zugeordneter Zuführeinrichtung für die verschleißfeste Struktur bildendes Material und die Einlaufauflage bildendes Material und
- Figur 5: eine Variante zu Figur 4 mit einer Laserkanone und einer zweikanaligen Zuführeinrichtung.

Die Erfindung ist überall dort mit Vorteil anwendbar, wo Gleitpaarungen mit hohen Standzeiten einen gewissen Einlauf benötigen, z.B. bei Maschinen der Hüttenindustrie, Mühlenindustrie, Nahrungsmittelindustrie, Motoren etc. Ein besonders bevorzugtes Anwendungsgebiet sind Großmotoren, insbesondere Zweitakt-Großdieselmotoren und hier insbesondere die mit einer Zylinderbüchse und zugeordneten Kolbenringnuten zusammenwirkenden Kolbenringe.

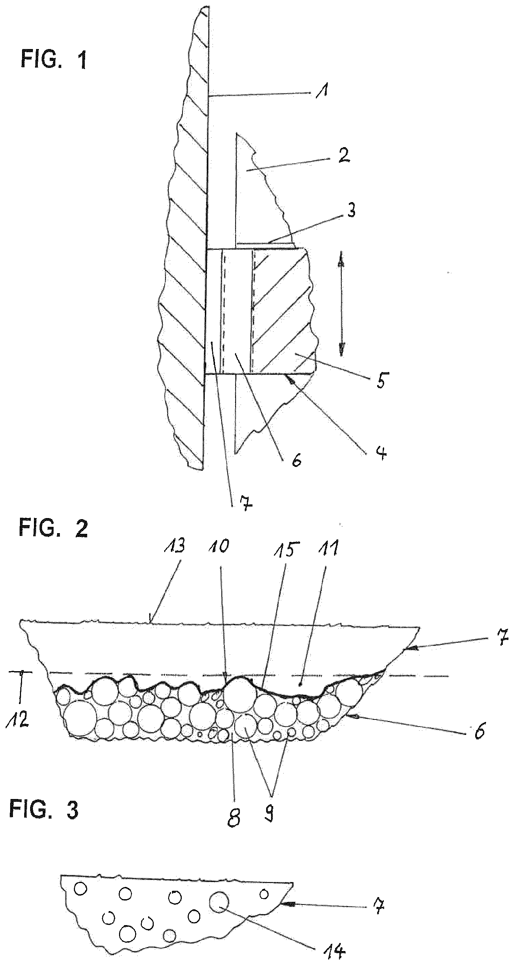

Die Figur 1 zeigt einen schematisch angedeuteten Abschnitt einer Zylinderbüchse 1, in der ein auf- und abgehender Kolben 2 angeordnet ist. Dieser ist mit umfangsseitigen Kolbenringnuten 3 versehen, in denen jeweils ein zugeordneter, mit seiner Umfangsfläche an der Innenseite der Zylinderbüchse 1 anliegender Kolbenring 4 aufgenommen ist. In Figur 1 sind lediglich eine Kolbenringnut 3 und ein Kolbenring 4 angedeutet. Der Kolbenring 4 besteht aus einem aus Stahlguss hergestellten Basisteil 5 und besitzt im Bereich seiner dem gegenüberliegenden Bauteil, hier der Zylinderbüchse 1 zugewandten Seite eine verschleißfeste Struktur 6, hier in Form einer auf das Basisteil 5 aufgebrachten Schutzschicht. Es wäre selbstverständlich auch denkbar, dass die verschleissfeste Struktur auch bereits dem Basisteil zugrunde liegt. Die verschleissfeste Struktur 6 ist umfangsseitig mit einer der Lauffläche der Zylinderbüchse 1 zugewandten Einlaufauflage 7 versehen.

Die verschleissfeste Struktur 6 besteht, wie aus Figur 2 ersichtlich ist, aus in eine Matrix 8 eingelagerten Partikeln 9 aus hartem Material. Dabei kann es sich um keramisches Material, wie Wolframkarbid (WC) mit einer Härte von 3000 HV bis 5000 HV handeln. Zur Bildung der Matrix 8 ist zweckmäßig eine Nickellegierung mit Phosphor (P) und/oder Silizium (Si) vorgesehen. Diese Materialien sind nicht toxisch, was einen Einsatz auch im Lebensmittelsektor ermöglicht. Zweckmäßig kann die Nickellegierung 1 bis 15 Vol%, vorzugsweise 3,65 Vol% P, 1 bis 6 Vol%, vorzugsweise 2,15 Vol% Si und Rest Ni enthalten. Der Volumenanteil der keramischen Teilchen am Gesamtvolumen der verschleißfesten Struktur 6 ist größer als 60 % und kann vorzugsweise bis zu 85 % betragen. Die eingelagerten keramischen Teilchen 9 besitzen zweckmäßig eine kugelförmige Konfiguration mit einem Durchmesser von 40 bis 160 Mikrometer (µm). Die Dicke der durch die verschleißfeste Struktur 6 gebildeten Beschichtung kann an die Verhältnisse des Einzelfalls angepasst werden. Bei Kolbenringen hier vorliegender Art kann die durch die verschleißfeste Struktur 6 gebildete Beschichtung eine Dicke von 0,2 bis 2 mm aufweisen.

Die radiale Oberfläche der verschleißfesten Struktur 6 ist vor Anbringung der Einlaufauflage 7, wie Fig. 2 erkennen lässt, vergleichsweise rau und uneben, d.h. es ergeben sich Erhebungen 10 und zwischen diesen sich befindende Täler 11, was für einen Einlaufvorgang schädlich wäre. Die auf der verschleißfesten Struktur 6 aufgebrachte Einlaufauflage 7 hat daher die Aufgabe, die Rauheit der Oberfläche der verschleißfesten Struktur 6 auszugleichen und die Täler 11 aufzufüllen, so dass gegen Ende eines Einlaufvorgangs eine in Figur 2 durch eine unterbrochene Linie 12 angedeutete Oberfläche ohne vorspringende Kanten und Ecken vorliegt. Da die Täler 11 aufgefüllt sind, sind auch die die Täler 11 seitlich begrenzenden, nach oben vorspringenden harten Teilchen 9 zuverlässig in sie umgebendes Material eingebettet, so dass ein Ausbrechen nicht zu befürchten ist. Die Einlaufauflage 7 macht eine Bearbeitung der verschleißfesten Struktur 6 entbehrlich. Bei der Herstellung der Einlaufauflage 7 ergibt sich eine Oberfläche 13 mit einer in Figur 2 angedeuteten, geringen Rauheit. Diese beträgt zweckmäßig 1 bis 20 Ra. Diese Rauheit ermöglicht eine gasdichte Anlage des Kolbenrings 4 an der zugeordneten Lauffläche der Zylinderbüchse 1. Eine zusätzliche Bearbeitung ist dabei nicht erforderlich.

Die Einlaufauflage 7 kann aus jedem geeigneten Einlaufmaterial bestehen, das während der Einlaufphase langsam abgetragen wird und verschwindet. Bei Großmotoren wie Zweitakt-Großdieselmotoren, wie sie für Schiffsantriebe Verwendung finden, beläuft sich die Einlaufphase auf ca. 1000 bis 2000 Betriebsstunden. Hierzu beträgt die Dicke der Einlaufauflage 7 zweckmäßig 50 bis 300 Mikrometer (µm). Das der Einlaufauflage 7 zugrunde liegende Einlaufmaterial soll wesentlich weicher als die darunter sich befindende, verschleißfeste Struktur 6 und jedenfalls nicht härter, vorzugsweise ebenfalls etwas weicher als die gegenüberliegende Gleitfläche, hier die Gleitfläche der Zylinderbüchse 1 sein. Zweckmäßig besitzt die Einlaufauflage 7 eine Härte von 100 bis 200 HV.

Zur Bildung der Einlaufauflage 7 kann ein Kupfer (Cu) und/oder Zinn (Sn) enthaltendes Metall Verwendung finden. Mit einer Bronze in Form einer Cu-Sn-Legierung mit 70 % Cu und 30 %Sn konnten bei Versuchen gute Ergebnisse erreicht werden. Denkbar wäre auch die Verwendung von Weißmetall, das zusätzlich zu Kupfer und Zinn noch Antimon (Sb) und/oder Zink (Zn) mit den bei Weißmetall üblichen Anteilen enthält. Der Schmelzpunkt derartiger Materialien liegt im Bereich zwischen 600 und 900° C, was den Beschichtungsvorgang erleichtert. Die untere Grenze der Schmelztemperatur der Einlaufauflage 7 soll 200° C, nicht unterschreiten.

Um die Einlaufzeit zu verlängern, d.h. die Standzeit der Einlaufauflage 7 zu vergrößern, kann diese wie in Fig. 3 angedeutet ist, mit eingelagerten, harten Teilchen 14 versehen sein. Dabei kann es sich zweckmäßig um Keramikteilchen vorzugsweise mit kugelförmiger Struktur und mit einem Durchmesser bis zu 50 Mikrometer (µm) handeln. Als keramisches Material kann Al₃O₂, CrO, Cr₃C₂ oder dergleichen Verwendung finden. Der Anteil der harten Teilchen 14 am Gesamtvolumen der Einlaufauflage 7 kann je nach gewünschter Standzeit der Einlaufauflage 7 5 bis 30 Vol% betragen.

Die die Einlauflage 7 bildende Beschichtung wird so auf die verschleißbare Struktur 6 aufgebracht, dass sich im Grenzbereich eine metallurgische Verbindung zwischen der verschleißfesten Struktur 6 und der Einlaufauflage 7 ergibt. Diese metallurgische Verbindung tritt in Form einer in Figur 2 für den Grenzbereich zwischen der verschleißfesten Struktur 6 und der Einlaufauflage 7 angedeuteten Grenzschicht 15 in Erscheinung, die aus Elementen beider angrenzenden Schichten gebildet wird. In Figur 1 ist die Grenzschicht 15 lediglich durch eine unterbrochene Linie angedeutet. Die Grenzschicht 15 kann durch Bildung einer Legierung oder Herbeiführung eines Diffusionsvorgangs gebildet werden. Im ersten Fall werden die Einlaufauflage 7 an die verschleißfeste Struktur 6 bzw. diese an den Basiskörper 5 anlegiert, im zweiten Fall andiffundiert. Dasselbe gilt für die Anbindung der die verschleißfeste Struktur 6 bildenden Beschichtung an den Basiskörper 5. Auch hier wird eine als Legierungszone oder Diffusionszone ausgebildete Grenzschicht gebildet, die nur in Figur 1 durch eine unterbrochene Linie angedeutet ist. Beim Anlegieren ergibt sich eine vergleichsweise große Dicke der Grenzschicht 15, was eine sehr gute gegenseitige Verbindung gewährleistet. Vielfach bilden sich in der Grenzschicht jedoch sehr spröde Kristalle, was die Gefahr von Sprödbruch erhöht. Diese Gefahr lässt sich dadurch vermeiden, dass die Grenzschicht als Diffusionsschicht ausgebildet wird. Eine Diffusionsschicht besitzt lediglich eine der Diffusionstiefe entsprechende Dicke, wodurch einerseits der Volumenanteil an spröden Kristallen in engen Grenzen gehalten wird und andererseits den noch eine gute metallurgische Verbindung gewährleistet wird. Je nach Art der gewünschten Aufbringung wird beim Aufbringvorgang mehr oder weniger Energie zugeführt. Beim Anlegieren werden sowohl das Beschichtungsmaterial als auch ein oberer Bereich des darunter sich befindende Materials geschmolzen. Beim Andiffundieren wird lediglich das Beschichtungsmaterial geschmolzen. Das darunter sich befindende Material wird erwärmt, verbleibt aber im erstarrten Zustand.

Keramisches Material in Form von Karbiden kann bei höheren Temperaturen zerfallen bzw. sich in andere Karbide mit anderen geometrischen Formen umwandeln. Sofern die harten Teilchen 9 der verschleißfesten Struktur 6 durch Karbide gebildet werden, wird die Einlaufauflage 7 zur Schonung dieser Karbide zweckmäßig so aufgebracht, dass die verschleißfeste Struktur 6 nicht über die Zerfallstemperatur der Karbide erwärmt wird. Dasselbe gilt natürlich auch für die Aufbringung der verschleißfesten Struktur 6 auf den Basiskörper 5. Zweckmäßig wird dabei so vorgegangen, dass die zur Durchführung eines Beschichtungsvorgangs erfolgende Wärmeübertragung auf die zu beschichtende Oberfläche und auf das dieser zugeführte Beschichtungsmaterial so kontrolliert erfolgt, dass nur das Beschichtungsmaterial vollständig schmilzt und das darunter sich befindende Material vollständig im erstarrten Zustand bleibt, was dann gemäß obigen Erläuterungen zu einer Diffusionsbindung führt.

Die Beschichtungsvorgänge können durch Aufsprühen des Beschichtungsmaterials, Aufschmelzen des Beschichtungsmaterials oder Aufsintern des Beschichtungsmaterials erfolgen. In jedem Fall kommen nur solche Prozesse in Frage, die zu einer metallurgischen Anbindung des Beschichtungsmaterials an die Unterlage, insbesondere der Einlaufauflage 7 an die verschleißfeste Struktur 6 führen. Die zur Bewerkstelligung der genannten Prozesse benötigte Wärme wird in Richtung zur jeweiligen Unterlage hin, d.h. zur verschleißfesten Struktur 6 oder zum Basiskörper hin zugeführt.

Zum Aufbringen der verschleißfesten Struktur 6 auf den Basiskörper 5 sowie zum Aufbringen der Einlaufauflage 7 auf die verschleißfeste Struktur 6 kann zweckmäßig eine einen Heizfleck erzeugende, gegenüber der zu beschichtenden Oberfläche relativ bewegliche Heizeinrichtung Verwendung finden. Zur Bildung der Heizeinrichtung kann zweckmäßig wenigstens eine einen Laserstrahl erzeugende Laserkanone und/oder wenigstens eine Induktionsspule Verwendung finden. Anstelle eines Laserstrahls kann auch ein sog. Plasma Transfer Arc (PTA) Verwendung finden. Dabei können die verschleißfeste Struktur und die Einlaufauflage in getrennten Arbeitsgängen oder in einem gemeinsamen Arbeitsgang aufgebracht werden. In jedem Fall kann dies zweckmäßig in derselben Weise erfolgen, so dass zum Aufbringen einer die verschleißfähige Struktur 6 bildenden Beschichtung und zum Aufbringen der Einlaufauflage 7 dieselbe Vorrichtung bzw. eine gleich aufgebaute Vorrichtung verwendbar ist bzw. sind.

Die eine verschleißfähige Struktur 6 bildende Beschichtung und/oder die Einlaufauflage 7 können, wie schon erwähnt, an die jeweils zugeordnete Unterlage anlegiert oder andiffundiert werden. Zum Anlegieren wird eine einen Übergangsbereich bildende Schmelze erzeugt, welche sowohl die Bestandteile der aufnehmenden Schicht als auch der auf diese aufzubringenden Schicht enthält. Hierzu werden sowohl das aufzubringende Material als auch eine oberflächennahe Zone der Unterlage so weit erhitzt, dass ein Übergang in die flüssige Phase erfolgt. Zum Andiffundieren wird lediglich das jeweils aufzubringende Material in die flüssige Phase überführt. Die Unterlage wird erwärmt, was den Diffusionsvorgang begünstigt. In jedem Fall wird also soviel Wärme in Richtung verschleißfester Struktur zugeführt, dass zumindest das dabei zugeführte Einlaufmaterial schmilzt.

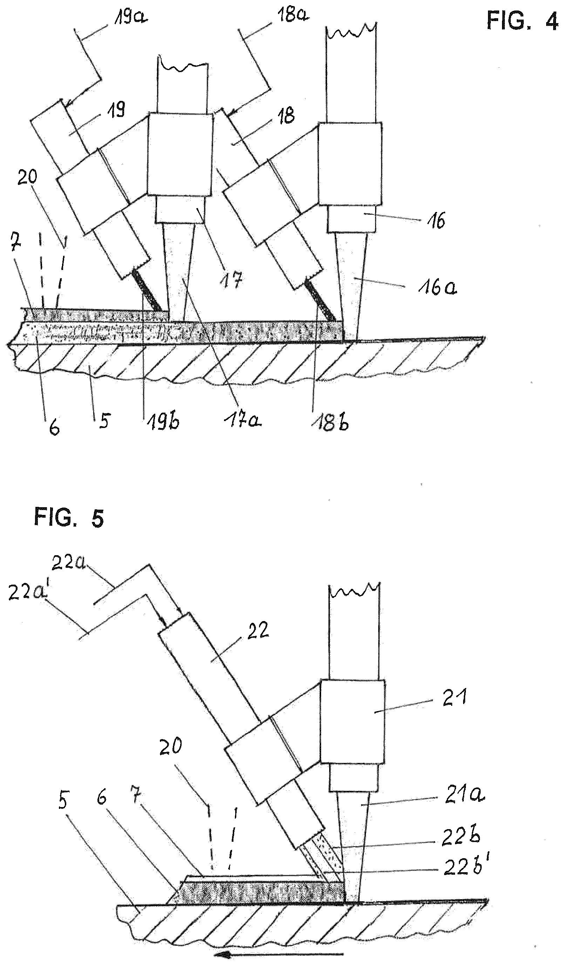

Geeignete Vorrichtungen sind in den Figuren 4 und 5 angedeutet. In beiden Fällen werden die verschleißfeste Struktur 6 in Form einer Beschichtung auf einen Basiskörper 5 und die Einlaufauflage 7 in Form einer weiteren Beschichtung auf die verschleißfeste Struktur 6 aufgebracht.

Bei der Ausführung gemäß Figur 4 sind zwei hintereinander angeordnete Energiequellen in Form von zwei hintereinander angeordneten Laserkanonen 16, 17 vorgesehen, die jeweils einen Laserstrahl 16a, 17a erzeugen. Anstelle einer Laserkanone könnte auch ein PTA-Brenner ( Plasma Transfer Arc-Brenner) und/oder eine Induktionsspule oder dergleichen vorgesehen sein. Jeder Energiequelle bzw. jedem Energieübertragungsstrahl ist eine Materialzuführeinrichtung 18 bzw. 19 zugeordnet, die einen Versorgungseingang 18a, 19a aufweist und eine als Materialübertragungsstrahlen 18b bzw. 19b angedeutete Materialzuführung zum Energieübertragungsstrahl bewirkt.

Das jeweilige Beschichtungsmaterial kann der zu beschichtenden Oberfläche in Form eines runden oder eckigen Drahts, eines Bands oder in Pulverform zugeführt werden. Im dargestellten Beispiel soll pulverförmiges Material verarbeitet werden. Dem entsprechend werden die Versorgungseinrichtungen 18, 19 über die Eingänge 18a, 19a mit entsprechendem pulverförmigem Material versorgt und geben einen pulverförmiges Material führenden Materialstrom 18b bzw. 19b ab. Das Pulver wird dabei zweckmäßig durch Schutzgas transportiert, das gegen Oxydation schützt.

Durch den Energieübertragungsstrahl 16a bzw. 17a, im dargestellten Beispiel jeweils in Form eines Laserstrahls, wird auf der zu beschichtenden Unterlage ein Heizfleck erzeugt. Der jeweils zugeordnete Materialübertragungsstrahl 18b bzw. 19b ist dabei so ausgerichtet, dass das Beschichtungsmaterial direkt in den Heizfleck oder einem diesem direkt benachbarten Bereich zugeführt wird. Im ersten Fall wird das zugeführte Material vom zugeordneten Energieübertragungsstrahl getroffen und trifft daher im geschmolzenen Zustand auf die jeweils zugeordnete Unterlage auf, die durch die Restenergie ebenfalls erwärmt wird. So fern eine durch eine Legierung gebildete Grenzschicht 15 gewünscht wird, wird die Energiequelle 16 bzw. 17 so eingestellt, dass die zugeführte Energie ausreicht, um sowohl das Beschichtungsmaterial als auch eine oberflächennahe Zone der Unterlage zu schmelzen. Sofern die Zwischenschicht 15 lediglich als Diffusionsschicht ausgebildet werden soll, wird die Energiequelle 16 bzw. 17 so eingestellt, dass nur das Beschichtungsmaterial vollständig schmilzt und die jeweils zugeordnete Unterlage im erstarrten Zustand verbleibt. Bei Verwendung einer Laserkanone ist dabei eine exakte Kontrolle der Energiezufuhr auf einfache Weise möglich.

Die in Figur 4 vorgesehenen Energiequellen 16, 17 mit jeweils zugeordneter Materialübertragungseinrichtung 18, 19 sind mit Abstand hintereinander angeordnet. Dieser Abstand kann so gewählt werden, dass die verschleißfeste Struktur 6 bereits vollständig erstarrt ist, bevor die Einlaufauflage 7 aufgebracht wird oder dass die verschleißfeste Struktur 6 zumindest an der Oberseite noch nicht erstarrt ist, wenn die Einlaufauflage 7 aufgebracht wird.

Im vorliegenden Beispiel mit einer auf einen eisenhaltigen Basiskörper 5 aufgebrachten, aus einer Nickellegierung mit eingelagerten Keramikpartikeln bestehenden, verschleißfesten Struktur 6 und mit einer durch eine Kupfer und Zinn enthaltende Bronze gebildeten Einlaufauflage 7 werden sowohl die verschleißfeste Struktur 6 als auch die Einlaufauflage 7 durch Diffusion mit der jeweils zugeordneten Unterlage verbunden. Der oben genannte Abstand zwischen den Energieerzeugungseinrichtungen 16, 17 wird daher so gewählt, dass die zunächst erzeugte verschleißfeste Struktur 6 bereits vollständig erstarrt ist, bevor die Einlaufauflage 7 aufgebracht wird. Die Energieübertragung wird dabei, wie oben bereits erwähnt, so gesteuert, dass nur das jeweils aufzubringende Material geschmolzen wird und die jeweilige Unterlage im erstarrten Zustand bleibt.

In Figur 4 ist ein dritter Energieübertragungsstrahl 20 angedeutet, der dem zweiten Energieübertragungsstrahl 17a nachgeordnet ist. Mit Hilfe des nachgeordneten Energieübertragungsstrahls 20 wird nur so viel Energie übertragen, dass die Oberfläche der Einlaufauflage 7 geglättet und für einen Einlaufvorgang geeignet gemacht wird. Anstelle der Verwendung eines eigenen, zur Glättung vorgesehenen Energieübertragungsstrahls 20 wäre es auch denkbar, nach erfolgter Beschichtung mit Hilfe des Energieübertragungsstrahls 16a und/oder 17a ohne entsprechende Materialzuführung eine Glättung zu bewirken.

Im dargestellten Beispiel sind die Energiequellen 16, 17 sowie die diesen zugeordneten Materialzuführeinrichtungen 18, 19 und die den nachgeordneten Energieübertragungsstrahl 20 erzeugende Energiequelle stationär angeordnet. Dementsprechend wird der Basiskörper 5 zur Herstellung der gewünschten Beschichtung entsprechend Pfeil v bewegt. Es wäre aber auch denkbar, den Basiskörper 5 stationär anzuordnen und die Beschichtungseinrichtungen zu bewegen. Dabei können sämtliche Energieerzeugungseinrichtungen mit gegebenenfalls zugeordneter Materialzuführeinrichtung zu einem eine einheitlich bewegbare Baugruppe bildenden Beschichtungskopf zusammengefasst werden.

Bei der Ausführung gemäß Figur 5 ist lediglich eine Energiequelle 21 in Form einer Laserkanone vorgesehen, die einen Energieübertragungsstrahl 21a erzeugt. Diesem werden zwei Materialstrahlen zur Bildung einer ersten, die verschleißfeste Struktur 6 bildenden Beschichtung und einer zweiten, die Einlaufauflage 7 bildenden Beschichtung zugeführt wird. Hierzu können zwei Materialzuführeinrichtungen vorgesehen sein. Im dargestellten Beispiel ist lediglich eine Materialzuführeinrichtung 22 vorgesehen, die zweikanalig ausgebildet ist. Dementsprechend ist die Materialzufuhreinrichtung 22 mit zwei Materialeingängen 22a bzw. 22a' für das die verschleißfeste Struktur 6 bildende Material bzw. das die Einlaufauflage 7 bildende Material versehen. Die Materialzufuhreinrichtung 22 erzeugt auch zwei in Beschichtungsrichtung einander nachgeordnete Materialübertragungsstrahlen 22b, 22b' für das die verschleißfeste Struktur 6 bildende bzw. das die Einlaufeinlage 7 bildende Material.

Die Materialübertragungsstrahlen 22b, 22b' sind so positioniert, dass zunächst der das die verschleißfeste Struktur 6 bildende Materialübertragungsstrahl 22b auf die noch nicht beschichtete Oberfläche des Basiskörpers 5 auftrifft und anschließend der das die Einlaufauflage 7 bildende Materialübertragungsstrahl 22b' auf die Oberseite der mittels des Strahls 22b bereits erzeugten, verschleißfesten Struktur 6 auftrifft. Der Abstand zwischen den Strahlen 22b, 22b' kann im vorliegenden Fall so gering sein, dass die bereits aufgebrachte, die verschleißfeste Struktur 6 bildende Schicht noch genügend Energie abgeben kann, um das zur Bildung der Einlaufauflage 7 aufgebrachte Material zu schmelzen.

Zur Erzeugung einer für Einlaufzwecke gut geeigneten Oberfläche kann wie bei der Ausführung gemäß Figur 4 ebenfalls ein nachlaufender Energieübertragungsstrahl 20 Verwendung finden. Bezüglich der Bauweise als einheitliche Baugruppe bzw. der Bewegung von Basisteil 5 bzw. Beschichtungskopf gilt ebenfalls dasselbe wie oben.

## Patentansprüche

1. Großmotor mit einem Maschinenteil, das zu einer Gleitpaarung mit zwei gegeneinander bewegbaren Maschinenteilen gehört und zumindest im Bereich der dem jeweils anderen Maschinenteil zugewandten Seite eine verschleißfeste Struktur (6) mit in einer metallischen Matrix (8) aufgenommenen Partikeln (9) aus vergleichsweise hartem Material und mit rauer und unebener Oberfläche aufweist, und das als Kolbenring (4) oder Zylinderbüchse (1) oder Kolben (2) mit wenigstens einer Kolbenringnut (3) oder anderes Gleitelement des Großmotors ausgebildet ist, **dadurch gekennzeichnet, dass** auf die verschleißfeste Struktur (6) eine deren obere Unebenheit und Rauheit ausgleichende Einlaufauflage (7) aufgebracht ist, die aus einem für Verschleiß während eines Einlaufvorgangs geeigneten Einlaufmaterial besteht, das vom Material der darunter sich befindenden verschleißfesten Struktur (6) verschieden und metallurgisch hiermit verbunden ist und das weicher als die verschleißfeste Struktur (6) und höchstens gleich verschleißfest wie die Gleitfläche des jeweils gegenüberliegenden Maschinenteils ist.

2. Großmotor nach Anspruch 1, **dadurch gekennzeichnet, dass** die Einlaufauflage (7) eine Härte von 100 bis 200 HV aufweist.

3. Großmotor nach einem der vorhergehenden Ansprüche, **dadurch gekennzeichnet, dass** das die Einlaufauflage (7) bildende Material eine Schmelztemperatur von höchstens 1050° C aufweist vorzugsweise von 600° C bis 800° C aufweist.

4. Großmotor nach einem der vorhergehenden Ansprüche, **dadurch gekennzeichnet, dass** die Einlaufauflage (7) im Neuzustand eine durchschnittliche Dicke von 50 bis 300 Mikrometer (µm) aufweist und vorzugsweise eine Oberflächenrauheit von 1 bis 20 Ra aufweist.

5. Großmotor nach einem der vorhergehenden Ansprüche, **dadurch gekennzeichnet, dass** in das Einlaufmaterial der Einlaufauflage (7) Teilchen (14) aus härterem Material eingelagert sind, die vorzugsweise aus keramischem Material insbesondere aus Al₂O₃, und/oder CrO und/oder Cr302 bestehen, wobei der Anteil der eingelagerten Teilchen (14) am Gesamtvolumen der Einlaufauflage (7) vorzugsweise 5 bis 30 Vol% beträgt.

6. Großmotor nach einem der vorhergehenden Ansprüche, **dadurch gekennzeichnet, dass** das der Einlaufauflage (7) zugrunde liegende Einlaufmaterial zumindest Kupfer und/oder Zinn enthält, vorzugsweise durch Bronze mit 70 % Cu und 30 % Sn oder durch Weißmetall gebildet wird, das neben Kupfer und Zinn Antimon (Sb) enthält.

7. Großmotor nach einem der vorhergehenden Ansprüche, **dadurch gekennzeichnet, dass** die die Einlaufauflage (7) aufnehmende, verschleißfeste Struktur (6) eine Ni-Legierung als Matrix (8) enthält, in die Partikel (9) aus keramischem Material eingelagert sind, die vorzugsweise kugelförmig sind und einen Durchmesser von 20 bis 50 Mikrometer (µm) aufweisen.

8. Großmotor nach einem der vorhergehenden Ansprüche, **dadurch gekennzeichnet, dass** die die Einlaufauflage (7) aufnehmende, verschleißfeste Struktur (6) als Beschichtung eines metallischen, vorzugsweise aus Eisenwerkstoff bestehenden Basiskörper (5) ausgebildet ist wobei die die Matrix (8) bildende Ni-Legierung 1 bis 15 Vol% P, 1 bis 6 Vol% Si, und Rest Ni vorzugsweise 3,65 Vol% P, und 2,15 Vol% Si, sowie Rest Ni enthält und wobei der Volumenanteil der keramischen Partikel (9) am Gesamtvolumen der die Einlaufauflage aufnehmenden verschleißfesten Struktur (6) mehr als 60 Vol%, vorzugsweise bis zu 85 Vol% oder 85 Vol% beträgt.

9. Großmotor nach einem der vorhergehenden Ansprüche, **dadurch gekennzeichnet, dass** die keramischen Partikel (9) der verschleißfesten Struktur (6) zumindest teilweise aus Wolframkarbid (WC) bestehen und eine Härte von 3000 bis 5000 HV aufweisen und vorzugsweise kugelförmig sind und einen Durchmesser von 40 bis 160 Mikrometer (µm) aufweisen.

10. Verfahren zur Herstellung eines zu einer Gleitpaarung gehörenden Maschinenteils eines Großmotors gemäß einem der vorhergehenden Ansprüche, **dadurch gekennzeichnet, dass** das eine verschleißfeste Struktur (6) aufweisende Maschinenteil mit einer die verschleißfeste Struktur (6) überdeckenden Einlaufauflage (7) beschichtet wird, wobei beim Beschichtungsvorganga so viel Energie zugeführt wird, dass sich eine metallurgische Anbindung der Einlaufauflage (7) an die verschleißfeste Struktur (6) ergibt.

11. Verfahren nach Anspruch 10, **dadurch gekennzeichnet, dass** die Einlaufauflage (7) an die verschleißfeste Struktur (6) anlegiert oder andiffundiert wird, wobei beim Beschichtungsvorgang nur so viel Energie zur Verfügung gestellt wird, dass nur das dem Einlaufauftrag (7) zugrunde liegende Einlaufmaterial schmilzt und das darunter sich befindende Material der verschleißfesten Struktur (6) im erstarrten Zustand bleibt.

12. Verfahren nach einem der vorhergehenden Ansprüche 10 oder 11, **dadurch gekennzeichnet, dass** die Einlaufauflage (7) auf die verschleißfeste Struktur (6) aufgesprüht oder aufgeschmolzen wird.

13. Verfahren nach einem der vorhergehenden Ansprüche 10 bis 12, **dadurch gekennzeichnet, dass** zur Beschichtung der verschleißfesten Struktur (6) mit der Einlaufauflage (7) eine gegenüber der verschleißfesten Struktur (6) relativ bewegbare, auf dieser einen Heizfleck erzeugende Heizeinrichtung (17; 21) Verwendung findet und dass das die Einlaufauflage (7) bildende Material in den Heizfleck oder einen diesem direkt benachbarten Bereich zugeführt wird, wobei zur Erzeugung des Heizflecks vorzugsweise eine Laserkanone oder ein PTA-Brenner Verwendung findet und wobei das die Einlaufauflage (7) bildende Material als Pulver, Draht oder Band dem Heizfleck zugeführt wird.

14. Verfahren nach einem der vorhergehenden Ansprüche 10 bis 13, **dadurch gekennzeichnet, dass** bei als Beschichtung eines Basiskörpers (5) ausgebildeter, verschleißfester Struktur (6) diese und die auf dieser aufgenommene Einlaufauflage (7) in gleicher Weise auf die jeweils zugeordnete Unterlage aufgebracht werden und dass die verschleißfeste Struktur (6) und die Einlaufauflage (7) in einem Arbeitsgang hergestellt werden.

15. Maschinenteil für einen Großmotor insbesondere gemäß einem der vorhergehenden Ansprüche 1 bis 9 wobei das Maschinenteil zu einer Gleitpaarung mit zwei gegeneinander bewegbaren Maschinenteilen des Großmotors gehört und zumindest im Bereich der dem jeweils anderen Maschinenteil zugewandten Seite eine verschleißfeste Struktur (6) mit in einer metallischen Matrix (8) aufgenommenen Partikeln (9) aus vergleichsweise hartem Material und mit rauer und unebener Oberfläche aufweist, und das als Kolbenring (4) oder Zylinderbüchse (1) oder Kolben (2) mit wenigstens einer Kolbenringnut (3) oder anderes Gleitelement des Großmotors ausgebildet ist, **dadurch gekennzeichnet, dass** auf die verschleißfeste Struktur (6) eine deren obere Unebenheit und Rauheit ausgleichende Einlaufauflage (7) aufgebracht ist, die aus einem für Verschleiß während eines Einlaufvorgangs geeigneten Einlaufmaterial besteht, das vom Material der darunter sich befindenden verschleißfesten Struktur (6) verschieden und metallurgisch hiermit verbunden ist und das weicher als die verschleißfeste Struktur (6) und höchstens gleich verschleißfest wie die Gleitfläche des jeweils gegenüberliegenden Maschinenteils ist.

## Geänderte Patentansprüche

### Geänderte Patentansprüche gemäss Regel 137(2) EPÜ.

**.** nterlage aufgebracht werden und dass die verschleißfeste Struktur (6) und die Einlaufauflage (7) in einem Arbeitsgang hergestellt werden.
